# EUROPEAN PATENT SPECIFICATION

(11) **EP 3 406 489 B1**
(45) Date of publication and mention of the grant of the patent: **18.09.2019**
(21) Application number: 17000875.9
(22) Date of filing: 23.05.2017
(51) Int. Cl.: B60R 13/08, B29C 44/18, B62D 29/00, B29L 31/30, B29K 677/00

(54) **ACOUSTIC BARRIER**
SCHALLBARRIERE
BARRIÈRE ACOUSTIQUE

(43) Date of publication of application: 28.11.2018
(73) Proprietor: AUDI AG, 85045 Ingolstadt (DE)
(72) Inventor: Pradas Gonzalez, Angel, 08635 Sant Esteve Sesrovires (ES)
(74) Representative: Eickmeyer, Dietmar

(56) References cited:
- WO-A1-01/19667
- WO-A1-01/24989
- WO-A1-2013/138290

## Description

The present invention relates to an improved acoustic barrier located within a body element of a motor vehicle; and to a method for producing the acoustic barrier. In particular, it improves an acoustic barrier of the expandable type.

### BACKGROUND OF THE INVENTION

In the automotive industry it is known to provide acoustic barriers in body elements, in particular pillar and frame member cross sections. For example, an acoustic barrier is provided between a door sill and the adjoining wheel house in order to reduce the transfer of airborne noise into the frame and the interior of the vehicle. Expandable acoustic barriers are typically used for this purpose. The expandable acoustic barriers are assembled within a cavity of the bodywork; and the bodywork subsequently is introduced into an oven and heated. The expandable acoustic barrier expands at increased temperature and fills the cavity of the bodywork.

It is customary to introduce a corrosion-protective liquid, especially liquid wax, into the cavity. For instance, DE 691 02 009 T2 discloses that an opening is provided in the direction of the cavity. Through the opening the liquid wax can be introduced when it is still warm. After cooling and solidifying, the liquid wax forms a protective layer against corrosion on the inside walls of the cavities. Then this opening to the cavity is sealed with a stopper.

Because of the expanded acoustic barrier, the protective wax cannot flow over the entire inner surface of the cavity, and some parts of the bodywork remain without the protective layer.

This problem can be overcome by providing a second wax introduction point on the bodywork, particularly on the opposite side of the acoustic barrier. By introducing the protective wax from both sides of the acoustic barrier, the entire surface of the cavity can be coated with the protective wax. A drawback of this solution is that it increases cost and manufacturing time. The process is cumbersome and another plug is needed to seal the second hole on the bodywork.

There is a need for an alternative which is less complex and does not require additional openings on the bodywork. WO 01/19667 A1 discloses a pre-product for an acoustic barrier for a body element of a motor vehicle comprising a rigid body and an expandable material lining the periphery of the rigid body. A second sealant e.g. wax is present on portions of the expandable material to be driven by the expansion process into acute corners. Thereby the corners where no foam can enter are sealed by the wax.

WO 02/062648 A2 relates to a the body of a motor vehicle, comprising at least one body element with a cavity, an opening for introducing into said cavity a cavity protecting fluid, and a closing element in the cavity which divides the cavity into two partial cavities. In order for the partial cavities to be provided with a cavity protection, the closing element is provided with a passage for the solidifying cavity protecting fluid, especially liquid wax, and the passage is configured as a siphon.

### SUMMARY OF THE INVENTION

An object of the invention is to provide an improved acoustic barrier of the expandable type located within a body element of a motor vehicle. In particular, the acoustic barrier of the present invention allows for the passage of a liquid protective fluid, e.g., an anticorrosive wax, and enables cavity protection of the body element without the need for additional openings in the body element for introduction of the protective liquid. An excellent level of acoustic insulation is achieved.

The present invention also provides a simple process for establishing both an acoustic barrier and a protective surface coating within a body element of a motor vehicle. The advantages of the invention include that the process does not require alteration of customary assembly and heating procedures of the respective body element. No additional steps are required.

### BRIEF DESCRIPTION OF THE DRAWINGS

FIG. 1 is a perspective view of a portion of a vehicle body in the transition region between the wheel house and the door sill.
FIG. 2 is a cross-sectional view of a portion of a vehicle body with a prior art acoustic barrier: a) prior to expansion, and b) after expansion;
FIG. 3 is a cross-sectional view of a vehicle body element with an acoustic barrier according to a first embodiment of the present invention in several stages of its production;
FIG. 4 is a cross-sectional view of a detail of the vehicle body element with an acoustic barrier shown in FIG. 3.

### DETAILED DESCRIPTION

The present invention provides a pre-product for an acoustic barrier for a body element of a motor vehicle. The pre-product comprises a rigid body featuring an end wall at one end of the rigid body. The edges of the end wall protrude laterally from the peripheral surface of the rigid body and form vertical ridges on opposite sides of the rigid body. The pre-product comprises a movable section which is vertically hinged to the end wall of the rigid body. In a particular embodiment, the hinge is located near one of the vertical edges of the end wall. An expandable material lines the periphery of the rigid body between the vertical ridges formed by the end wall. Consequently, the whole contour of the rigid body is lined with the expandable material, with the exception of the surface of the end wall.

The function of the rigid body is to support the expandable material on its periphery. The rigid body must remain dimensionally stable during the heating process in the oven. Its shape and dimensions must not change at elevated temperatures. In one embodiment, the rigid body is comprised of a thermoplastic material. In a particular embodiment, the rigid body is comprised of polyamide.

The acoustic barrier of the present invention comprises a movable section attached to the rigid body. In one embodiment, the movable section is comprised of a thermoplastic material. In a particular embodiment, the movable section is comprised of polyamide.

In one embodiment both the rigid body and the movable section are comprised of the same material. In a further embodiment, both the rigid body and the movable section are elements of a single injection-molded part. This single part also comprises the vertical hinge joining the rigid body and the movable section.

This movable section can be rotated relative to the rigid body around a hinge. No expandable material is present on this attached section or second body. A vertical or perpendicular wall, the end wall, is disposed between the main rigid body and the second body, in order to ensure that no expandable material covers this second movable body when the expandable material is expanded.

In one embodiment, the movable section features at least one nose or ridge on at least one of its walls pointing away from the rigid body. The at least one nose or ridge acts as a spacer when the pre-product is introduced into the cavity of a body element of a motor vehicle and makes sure that a gap is present between the respective wall of the movable section and the inner surface of the cavity. In one embodiment, the gap has a width in the range of from 0.1 to 2 mm, for instance, 0.5 to 1.5 mm, or 0.8 to 1.2 mm. The gap width corresponds to the elevation of the nose or ridge above the respective wall of the movable section.

The expandable material expands on heating to seal all the gaps around the acoustic barrier, or the pre-product for the acoustic barrier, respectively. It thereby compensates any dimensional tolerances of the cavity of the body element. In one embodiment, the expandable material expands at a temperature in the range of from 140 to 180°C.

The present invention also provides a body or body element for a motor vehicle comprising at least one acoustic barrier. The acoustic barrier is formed using the pre-product of the present invention. The acoustic barrier interrupts noise transmission and dirt flow to the interior of the vehicle. For example, the body element can comprise a wheel arch, e.g., a rear wheel arch, and the acoustic barrier blocks the transmission of sound, particles, or humidity from the rear wheel arch into the interior of the vehicle. In one embodiment, the acoustic barrier is located in the cavity of a body element comprising a rear wheel arch and a lateral panel, i.e., a metal sheet which it's disposed on the exterior part of the vehicle and covers the entire lateral part of the vehicle.

The present invention also provides a method of sealing a body element of a motor vehicle. The method comprises mounting the pre-product of the present invention in a cavity of the body element. In one embodiment, the pre-product is mounted on a part of the body element prior to its assembly. The remaining parts of the body element subsequently are assembled to form the body element with the pre-product disposed in a cavity of the body element. In the assembled position, a gap is present between the end wall of the rigid body and the movable section of the pre-product. In one embodiment, the gap has a width in the range of from 0.1 to 2 mm, for instance, 0.5 to 1.5 mm, or 0.8 to 1.2 mm.

For example, the pre-product is assembled on a wheel arch, and a lateral panel is joined to the wheel arch. In this assembly step, the lateral panel pushes the second movable body towards the main rigid body. In the final position, a gap is disposed between the second movable body and the main rigid body. In one embodiment, the width of this gap between the second movable body and the vertical wall disposed on the main body is about 1mm.

The assembled body element then is heated to cause the expandable material to expand and contact the inner surface of the cavity. The expanding material thus seals the gap between the inner surface of the cavity and the periphery of the pre-product, except for the part where the movable section is located. Due to the end wall, no expandable material permeates to the gap between the rigid body and the movable section, and to the movable section. Heating of the body element typically is performed in an oven. In one embodiment, the body element is heated to a temperature in the range of from 140 to 180°C for a time period of from 15 to 30 minutes, e.g., about 20 minutes.

A cavity protective fluid is subsequently introduced into the cavity of the body element. The cavity protective fluid is used in order to seal the gaps and holes between the individual parts of the body element, for instance, a lateral panel and a wheel arch. In one embodiment, the protective fluid is an anticorrosion wax applied in the liquid state , i.e., a liquid wax. In one embodiment, the protective fluid is introduced through a hole disposed on the upper part of the body element, e.g., a wheel arch. Gravity causes the protective fluid to flow down from the hole towards the bottom of the body element, coating the inner surface of the cavity in the process.

The cavity protective fluid is allowed to flow through a gap between the end wall of the rigid body and the movable section of the pre-product to coat the inner surface of the cavity. The gap disposed on the acoustic barrier allows the wax to flow through the acoustic barrier and also coat the inner surface of the cavity in the region located downstream of the acoustic barrier. Preferably, the protective fluid covers the entire inner surface of the cavity, including the lower part of the body element, e.g., a wheel arch.

To finish the acoustic barrier, the cavity protective fluid subsequently is allowed to solidify. Due to capillary action, some of the protective fluid is retained in the gap between the end wall of the rigid body and the movable section. The cavity protective fluid retained in the gap solidifies to seal the gap. Likewise, some of the protective fluid is retained in any gap that may be present between the movable section and the inner surface of the body element. On solidification of the protective fluid, such gaps also are sealed. The gaps are completely filled with protective fluid, e.g., wax. In these areas, the solidified protective fluid effectively acts as acoustic barrier.

### DETAILED DESCRIPTION OF THE DRAWINGS

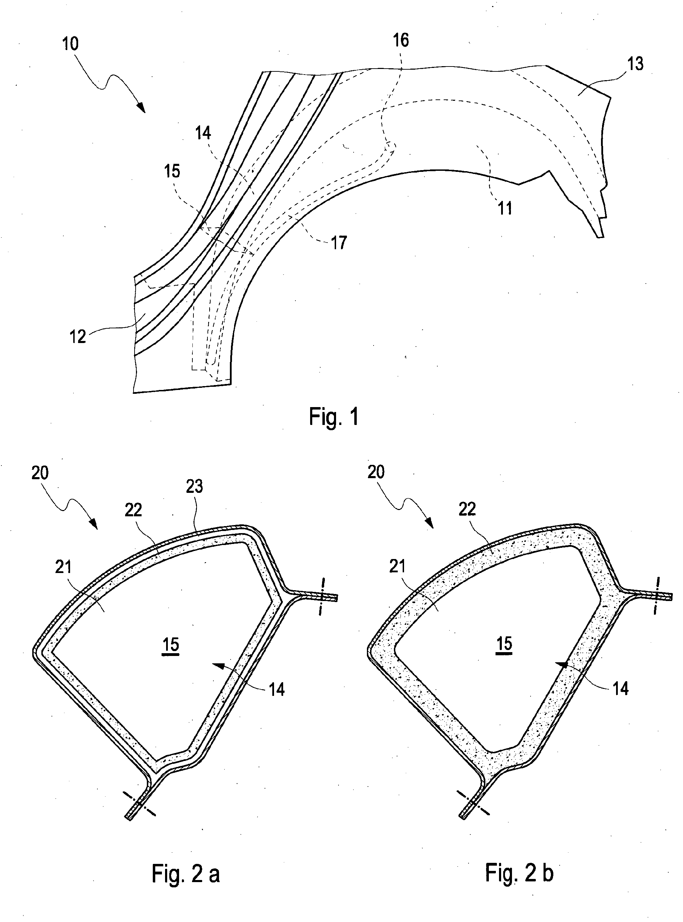

A portion of a motor vehicle body 10, shown in FIG. 1, comprises a wheel house 11, a side or door sill 12, and a lateral panel 13, although the present invention can be used with any suitable elements of the vehicle body. The body 10 or at least one of the body elements (11,12,13) has a cavity 14, in which an acoustic barrier 15 is located. Cavity 14 has an inlet opening 16, through which a protective fluid 17 for the cavity, for example a preservative, in particular liquid wax, can be introduced into the cavity 14. The protective fluid 17 is liquid when introduced into the cavity 14, so that gravity makes it flow downward into the cavity 14, as is shown in FIG. 1. In order for the protective fluid 17 to reach the lower part of the cavity 14, it has to pass the acoustic barrier 15.

FIG. 2 shows a cross-sectional view of a vehicle body element 20 with a prior art acoustic barrier 15 located in a cavity 14 of the vehicle body element 20. FIG. 2a shows the situation prior to expansion of the acoustic barrier 15, while FIG. 2b shows the same view after expansion. In its initial state shown in FIG. 2a, the acoustic barrier 15 comprises a rigid body 21 and an expandable material 22. Prior to expansion, the expandable material 22 lines the periphery of the rigid body 21, leaving a gap 23 between the acoustic barrier 15 and the inner surface of the vehicle body element 20. FIG. 2b shows the acoustic barrier 15 after expansion of the expandable material 22. Gap 23 is completely filled by the acoustic barrier 15, blocking the passage of any protective fluid 17 introduced into cavity 14.

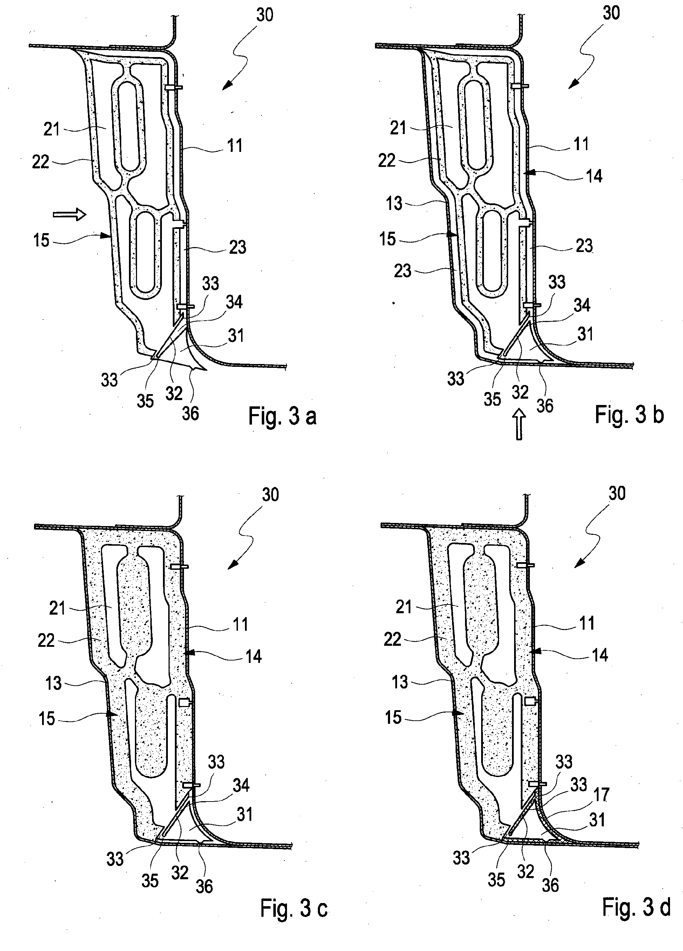

FIG. 3 is a cross-sectional view of a portion of a vehicle body element 30 with an acoustic barrier 15 located in a cavity 14 of the vehicle body element 30 according to a first embodiment of the present invention in several stages of its production.

FIG. 3a shows the initial state of the acoustic barrier 15 prior to completion of assembly of the vehicle body element 30; FIG. 3b shows the state prior to expansion; FIG. 3c shows the state after expansion of the expandable material 22; and FIG. 3d shows the finished vehicle body element 30 after introduction of a protective fluid 17.

In its initial state shown in FIG. 3a, the acoustic barrier 15 comprises a rigid body 21, an expandable material 22, and a movable section 31 hinged to an end wall 32 of the rigid body 21. An expandable material 22 lines the contour of the rigid body 21, with the exception of the surface of end wall 32, i.e., between the vertical ridges 33 formed by the edges of the end wall 32. The acoustic barrier 15 is positioned inside a wheel arch. A gap 23 is present between the acoustic barrier 15 and the inner surface of the wheel arch 11. The periphery of movable section 31 is not lined with expandable material 22. A gap 34 is present between end wall 32 and movable section 31. The arrow in FIG. 3a indicates the direction from which a lateral panel 13 is attached to the wheel arch 11.

In the stage shown in FIG. 3b, a lateral panel 13 has been attached to the wheel house 11, closing the vehicle body element 30 and forming a cavity 14, in which the acoustic barrier 15 is located. A gap 23 is present between the acoustic barrier 15 and the inner surface of the vehicle body element 30. By joining the lateral panel 13 to the wheel arch 11 in the direction indicated by the arrow in FIG. 3b, the movable section 31 is rotated around hinge 35 and forms a gap 34 between the end wall 32 of the rigid body 21 and the movable section 31. A nose 36 on the wall of the movable section 31 acts as a spacer and makes sure that a gap is also present between the movable section 31 and the inner surface of cavity 14, i.e. the wall of lateral panel 13.

FIG. 3c shows the vehicle body element 30 after expansion of the expandable material 22. The gap 23 between the acoustic barrier 15 and the wall of the cavity 14 of the vehicle body element 30 has been completely filled except for the part blocked by the vertical ridges 33 of the end wall 32 of rigid body 21. The gaps between the movable section 31 and the wheel arch 11, the movable section 31 and the lateral panel 13, and the gap 34 between the rigid body 21 and the movable section 31 persist.

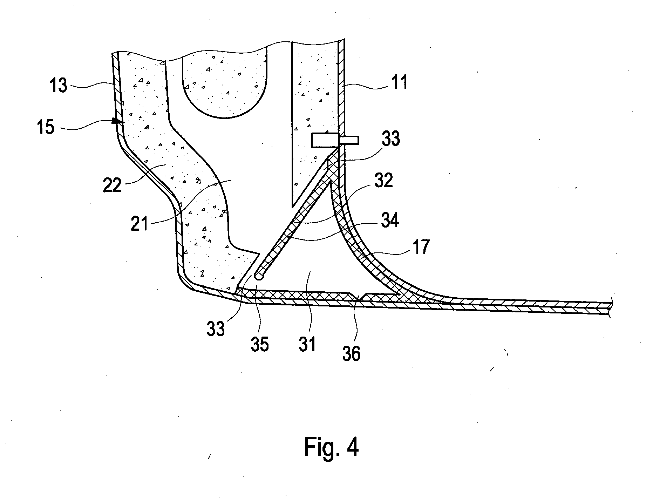

FIG. 3d shows the final state of the vehicle body element 30 after introduction of a protective fluid 17. The protective fluid 17, e.g., an anticorrosive wax, completely fills the gaps around movable section 31. This is also shown in Fig. 4, which is an enlarged view of a detail of the vehicle body element 30 of FIG. 3d.

As can be seen, the expanded material enveloping rigid body 21 and the protective fluid 17 enveloping movable section 31 taken together completely seal the wall of cavity 14 of the vehicle body element 30, providing a barrier against noise, water, and dirt.

### List of reference signs

- 10: motor vehicle body
- 11: wheel house/wheel arch
- 12: door sill
- 13: lateral panel
- 14: cavity
- 15: acoustic barrier
- 16: inlet opening
- 17: protective fluid/wax
- 20: vehicle body element
- 21: rigid body
- 22: expandable material
- 23: gap
- 30: vehicle body element
- 31: movable element
- 32: end wall
- 33: vertical ridge
- 34: gap
- 35: hinge
- 36: nose or ridge

## Claims

1. A pre-product for an acoustic barrier (15) for a body element (20,30) of a motor vehicle comprising
a. a rigid body (21) featuring an end wall (32) at one end of the rigid body (21), the edges of the end wall (32) laterally protruding from the peripheral surface of the rigid body (21) and forming vertical ridges (33) on opposite sides of the rigid body (21);
b. a movable section (31) vertically hinged to the end wall (32) of the rigid body (21).
c. an expandable material (22) lining the periphery of the rigid body (21) between the vertical ridges (33) formed by the end wall (32).

2. The pre-product of claim 1, wherein the rigid body (21) is comprised of polyamide.

3. The pre-product of claim 1 or 2, wherein the movable section (31) is comprised of polyamide.

4. The pre-product of any one of claims 1 to 3, wherein the rigid body (21) and the movable section (31) are elements of a single injection-molded part.

5. The pre-product of any one of claims 1 to 4, wherein the expandable material (22) expands at a temperature in the range of from 140 to 180°C.

6. A body (10) or body element (20,30) for a motor vehicle comprising at least one acoustic barrier (15) formed with the pre-product of any one of claims 1 to 5.

7. A method of sealing a body element (20,30) of a motor vehicle, the method comprising:
a. mounting the pre-product of any one of claims 1 to 5 in a cavity (14) of the body element (20,30);
b. heating the body element (20,30) to cause the expandable material (22) to expand and contact the inner surface of the cavity (14);
c. introducing a cavity protective fluid (17) into the cavity (14) of the body element (20,30);
d. allowing the cavity protective fluid (17) to flow through a gap (34) between the end wall (32) of the rigid body (21) and the movable section (31) of the pre-product of any one of claims 1 to 5 to coat the surface of the cavity (14);
e. allowing the cavity protective fluid (17) to solidify, wherein the cavity protective fluid (17) retained in the gap (34) solidifies to seal the gap (34).

8. The method of claim 7, wherein the body element (20,30) is heated to a temperature in the range of from 140 to 180°C for a time period of from 15 to 30 minutes.

9. The method of claim 7 or 8, wherein the cavity protective fluid (17) is a liquid wax.

10. The method of any one of claims 7 to 9, wherein the gap (34) has a width in the range of from 0.1 to 2 mm.

## Patentansprüche

1. Vorprodukt für eine Schallbarriere (15) für ein Karosserieelement (20, 30) eines Motorfahrzeugs, umfassend
a. einen starren Körper (21), der eine Endwand (32) an einem Ende des starren Körpers (21) aufweist, wobei die Kanten der Endwand (32) seitlich von der peripheren Oberfläche des starren Körpers (21) vorstehen und vertikale Rippen (33) an entgegengesetzten Seiten des starren Körpers (21) bilden;
b. einen beweglichen Abschnitt (31), der vertikal an der Endwand (32) des starren Körpers (21) angelenkt ist;
c. ein ausdehnbares Material (22), das die Peripherie des starren Körpers (21) zwischen den durch die Endwand (32) gebildeten vertikalen Rippen (33) auskleidet.

2. Vorprodukt nach Anspruch 1, wobei der starre Körper (21) aus Polyamid besteht.

3. Vorprodukt nach Anspruch 1 oder 2, wobei der bewegliche Abschnitt (31) aus Polyamid besteht.

4. Vorprodukt nach einem der Ansprüche 1 bis 3, wobei der starre Körper (21) und der bewegliche Abschnitt (31) Elemente eines einzelnen Spritzgussteils sind.

5. Vorprodukt nach einem der Ansprüche 1 bis 4, wobei sich das ausdehnbare Material (22) bei einer Temperatur im Bereich von 140 bis 180 °C ausdehnt.

6. Karosserie (10) oder Karosserieelement (20, 30) für ein Motorfahrzeug, umfassend mindestens eine Schallbarriere (15), die mit dem Vorprodukt nach einem der Ansprüche 1 bis 5 gebildet ist.

7. Verfahren zum Abdichten eines Karosserieelements (20, 30) eines Motorfahrzeugs, wobei das Verfahren umfasst:
a. Anbringen des Vorprodukts nach einem der Ansprüche 1 bis 5 in einem Hohlraum (14) des Karosserieelements (20, 30);
b. Erwärmen des Karosserieelements (20, 30), um zu bewirken, dass sich das ausdehnbare Material (22) ausdehnt und mit der Innenoberfläche des Hohlraums (14) in Kontakt tritt;
c. Einbringen eines schützenden Fluids (17) für den Hohlraum in den Hohlraum (14) des Karosserieelements (20, 30);
d. Gestatten, dass das schützende Fluid (17) für den Hohlraum durch einen Spalt (34) zwischen der Endwand (32) des starren Körpers (21) und dem beweglichen Abschnitt (31) des Vorprodukts nach einem der Ansprüche 1 bis 5 fließt, um die Oberfläche des Hohlraums (14) zu beschichten;
e. Gestatten, dass sich das schützende Fluid (17) für den Hohlraum verfestigt, wobei sich das schützende Fluid (17) für den Hohlraum, das in dem Spalt (34) zurückbehalten ist, zum Abdichten des Spalts (34) verfestigt.

8. Verfahren nach Anspruch 7, wobei das Karosserieelement (20, 30) auf eine Temperatur im Bereich von 140 bis 180 °C für einen Zeitraum von 15 bis 30 Minuten erwärmt wird.

9. Verfahren nach Anspruch 7 oder 8, wobei das schützende Fluid (17) für den Hohlraum ein flüssiges Wachs ist.

10. Verfahren nach einem der Ansprüche 7 bis 9, wobei der Spalt (34) eine Breite im Bereich von 0,1 bis 2 mm aufweist.

## Revendications

1. Produit de base pour une barrière acoustique (15) pour un élément de corps (20, 30) d'un véhicule à moteur comprenant
a. un corps rigide (21) comportant une paroi d'extrémité (32) à une extrémité du corps rigide (21), les bords de la paroi d'extrémité (32) faisant saillie latéralement depuis la surface périphérique du corps rigide (21) et formant des arêtes verticales (33) sur des côtés opposés du corps rigide (21) ;
b. une section mobile (31) articulée verticalement sur la paroi d'extrémité (32) du corps rigide (21) ;
c. un matériau expansible (22) revêtant la périphérie du corps rigide (21) entre les arêtes verticales (33) formées par la paroi d'extrémité (32).

2. Produit de base selon la revendication 1, dans lequel le corps rigide (21) est constitué de polyamide.

3. Produit de base selon la revendication 1 ou 2, dans lequel la section mobile (31) est constituée de polyamide.

4. Produit de base selon l'une quelconque des revendications 1 à 3, dans lequel le corps rigide (21) et la section mobile (31) sont des éléments d'une partie moulée par injection unique.

5. Produit de base selon l'une quelconque des revendications 1 à 4, dans lequel le matériau expansible (22) se dilate à une température dans la plage de 140 à 180 °C.

6. Corps (10) ou élément de corps (20, 30) pour un véhicule à moteur comprenant au moins une barrière acoustique (15) formée avec le produit de base selon l'une quelconque des revendications 1 à 5.

7. Procédé d'étanchéification d'un élément de corps (20, 30) d'un véhicule à moteur, le procédé comprenant :
a. le montage du produit de base selon l'une quelconque des revendications 1 à 5 dans une cavité (14) de l'élément de corps (20, 30) ;
b. le chauffage de l'élément de corps (20, 30) pour provoquer l'expansion du matériau expansible (22) et sa mise en contact avec la surface interne de la cavité (14) ;
c. l'introduction d'un fluide de protection de cavité (17) dans la cavité (14) de l'élément de corps (20, 30) ;
d. le fait de permettre au fluide de protection de cavité (17) de s'écouler à travers un espace (34) entre la paroi d'extrémité (32) du corps rigide (21) et la section mobile (31) du produit de base selon l'une quelconque des revendications 1 à 5 pour enduire la surface de la cavité (14) ;
e. le fait de laisser le fluide de protection de cavité (17) se solidifier, dans lequel le fluide de protection de cavité (17) retenu dans l'espace (34) se solidifie pour étanchéifier l'espace (34).

8. Procédé selon la revendication 7, dans lequel l'élément de corps (20, 30) est chauffé jusqu'à une température dans la plage de 140 à 180 °C pendant une période de 15 à 30 minutes.

9. Procédé selon la revendication 7 ou 8, dans lequel le fluide de protection de cavité (17) est une cire liquide.

10. Procédé selon l'une quelconque des revendications 7 à 9, dans lequel l'espace (34) a une largeur dans la plage de 0,1 à 2 mm.
